# EUROPEAN PATENT APPLICATION

(11) **EP 4 538 855 A1**
(43) Date of publication of application: **16.04.2025**
(21) Application number: 23923782.9
(22) Date of filing: 21.11.2023
(51) Int. Cl.: G06F 3/16

(54) **LOUDSPEAKER MANAGEMENT METHOD AND APPARATUS, MEDIUM AND ELECTRONIC DEVICE**

(30) Priority: 20.02.2023 CN 202310193152
(71) Applicant: Honor Device Co., Ltd., Shenzhen, Guangdong 518040 (CN)
(72) Inventor: GU, Qimeng, Shenzhen, Guangdong 518040 (CN); ZHONG, Guanghua, Shenzhen, Guangdong 518040 (CN); HUANG, Wen, Shenzhen, Guangdong 518040 (CN); ZHU, Xiaolu, Shenzhen, Guangdong 518040 (CN)
(74) Representative: MERH-IP Matias Erny Reichl Hoffmann Patentanwälte PartG mbB
(86) International application number: PCT/CN2023/132965
(87) International publication number: WO 2024/174619

(57) **Abstract**

This application relates to the field of electronic technologies, and discloses a speaker management method and apparatus, a medium, and an electronic device, so that overall energy consumption of the electronic device in some scenarios can be effectively optimized, and it can be ensured that total sound intensity of the electronic device meets a requirement. The method is applied to an electronic device, and the electronic device includes at least a first speaker and a second speaker. The method includes: determining that the electronic device is in a first use scenario; adjusting an output volume of the first speaker based on a first volume control parameter that is of the first speaker and that corresponds to the first use scenario; and adjusting an output volume of the second speaker based on a second volume control parameter that is of the second speaker and that corresponds to the first use scenario, where the first volume control parameter is different from the second volume control parameter.

## Description

This application claims priority to Chinese Patent Application No. 202310193152.7, filed with the China National Intellectual Property Administration on February 20, 2023 and entitled "SPEAKER MANAGEMENT METHOD AND APPARATUS, MEDIUM, AND ELECTRONIC DEVICE", which is incorporated herein by reference in its entirety.

### TECHNICAL FIELD

This application relates to the field of electronic technologies, and in particular to a speaker management method and apparatus, a medium, and an electronic device.

### BACKGROUND

Currently, a dual-speaker solution is widely used in electronic devices such as a mobile phone and a tablet computer. Compared with a conventional single-speaker solution, the dual speakers may provide a better volume and a better sound quality effect, but may also have an adverse impact on the electronic device such as high power consumption and heating.

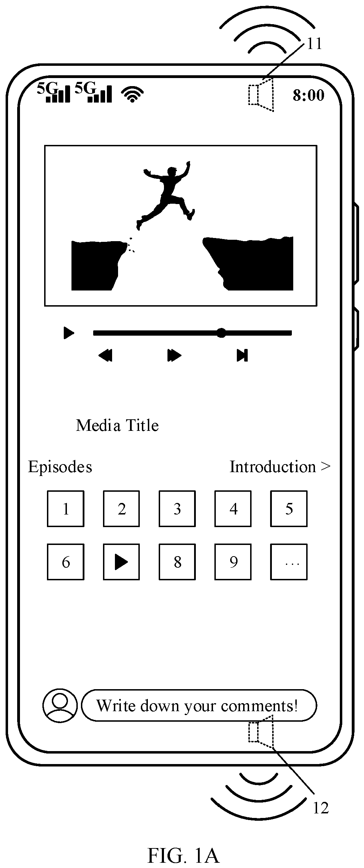

As an example, FIG. 1A is a schematic diagram of a scenario in which a mobile phone plays audio out. A mobile phone 10 shown in FIG. 1A internally includes dual speakers, for example, an upper speaker 11 and a lower speaker 12 that are shown by dashed lines. In this case, the mobile phone 10 shown in FIG. 1A may play audio out by using the upper speaker 11 and the lower speaker 12, for example, play audio out when playing a video. Currently, a manufacturer performs speaker management based on a running scenario of the electronic device, and performs volume processing on the upper speaker and the lower speaker by using a same volume processing policy. In this case, in any running scenario, if volumes of the upper speaker and the lower speaker are adjusted simultaneously based on a same volume processing policy, the two speakers generate a same volume. However, the upper speaker and the lower speaker in the mobile phone 10 generally have different sound energy efficiency due to different hardware specifications, that is, the upper speaker and the lower speaker have different power consumption when generating a same volume. For example, when the volume is large, power consumption of the upper speaker 11 is higher than power consumption of the lower speaker 12, and overall power consumption of the mobile phone 10 is relatively high. Therefore, power consumption of the dual speakers cannot achieve optimal performance when the volumes are adjusted based on a same volume processing policy.

### SUMMARY

Embodiments of this application provide a speaker management method and apparatus, a medium, and an electronic device, so that overall energy consumption of the electronic device in some scenarios can be effectively optimized, and it can be ensured that total sound intensity of the electronic device meets a requirement.

According to a first aspect, an embodiment of this application provides a speaker management method, where the method is applied to an electronic device, and the electronic device includes at least a first speaker and a second speaker. The method includes: determining that the electronic device is in a first use scenario; adjusting an output volume of the first speaker based on a first volume control parameter that is of the first speaker and that corresponds to the first use scenario; and adjusting an output volume of the second speaker based on a second volume control parameter that is of the second speaker and that corresponds to the first use scenario, where the first volume control parameter is different from the second volume control parameter. For example, when the electronic device includes an upper speaker and a lower speaker, the first speaker and the second speaker may be different speakers in the upper speaker and the lower speaker, for example, the first speaker is the lower speaker and the second speaker is the upper speaker. Certainly, the electronic device may have dual speakers, or may have a plurality of speakers.

In this way, in this application, for a current use scenario, volume control parameters of speakers may be adjusted, instead of always adjusting volumes of different speakers based on a same volume control parameter. In this way, overall energy consumption of the electronic device in some scenarios can be effectively optimized, and it can be ensured that total sound intensity of the electronic device meets a requirement.

In a possible implementation of the first aspect, the method further includes: detecting that the electronic device is switched from the first use scenario to a second use scenario; adjusting the output volume of the first speaker based on a third volume control parameter that is of the first speaker and that corresponds to the second use scenario; and adjusting the output volume of the second speaker based on a fourth volume control parameter that is of the second speaker and that corresponds to the second use scenario, where the third volume control parameter is different from the fourth volume control parameter. In this way, when a use scenario is switched, the electronic device may automatically adjust the volume control parameters of the speakers, to automatically adjust output volumes of corresponding speakers based on adjusted volume adjustment parameters. This meets a requirement of a user on a level of an output volume in a use scenario switching process.

In a possible implementation of the first aspect, the use scenario of the electronic device includes at least one of an application running state and a device orientation of the electronic device. It may be understood that only the application running state is considered in some use scenarios, and not only the application running state but also the device orientation are considered in some other use scenarios.

In a possible implementation of the first aspect, the application running state includes at least one of the following: a music application running state, a video application running state, and a navigation application running state; and the device orientation includes at least one of the following: landscape, portrait, and being handheld. For example, the foregoing application running state may include a music application running state (for example, a music play scenario), a video application running state (for example, a video playback scenario), a short video application running state (for example, a short video playback scenario), and a navigation application running state (for example, a navigation scenario). In addition, the foregoing application running state may be determined by using an application running in foreground of the electronic device. It may be understood that, in different application running states, the user generally has different sound effect requirements and different battery life requirements on the electronic device.

In a possible implementation of the first aspect, power consumption of the first speaker is better than power consumption of the second speaker, and the first volume control parameter is greater than the second volume control parameter. For example, for the upper speaker and the lower speaker in the mobile phone, compared with a manner in a conventional technology in which the dual speakers output a same volume, in some scenarios (for example, a short video playback scenario in which a sound effect requirement is not high and a battery life requirement is relatively high) in this application, an output volume of a speaker with relatively good power consumption may be increased, and an output volume of a speaker with relatively poor power consumption may be reduced, but an overall sound pressure is not reduced, so that both sound effect experience and power consumption performance are considered, thereby improving overall battery life performance of the device.

In a possible implementation of the first aspect, the first volume control parameter and the second volume control parameter belong to one of a plurality of groups of preset volume control parameters, the first use scenario is one of a plurality of preset use scenarios, the plurality of groups of preset volume control parameters are in a one-to-one correspondence with the plurality of preset use scenarios, one volume control parameter in each group of preset volume control parameters uniquely corresponds to one speaker in the electronic device, and overall power consumption and a sound effect of the electronic device match a corresponding preset use scenario after output volumes of corresponding speakers in the electronic device are adjusted based on any one group of preset volume control parameters. It may be understood that a group of preset volume control parameters corresponding to each preset use scenario may be set when power consumption and effect experience are tested in a laboratory.

In a possible implementation of the first aspect, the method further includes: receiving a volume adjustment instruction of a user, where the volume adjustment instruction is used to indicate a volume scaling factor; when the electronic device is in the first use scenario, based on the volume scaling factor, adjusting, to a fifth volume adjustment parameter, the first volume control parameter corresponding to the first use scenario, and adjusting, to a sixth volume adjustment parameter, the second volume control parameter corresponding to the first use scenario; and readjusting the output volume of the first speaker based on the fifth volume control parameter, and readjusting the output volume of the second speaker based on the sixth volume control parameter. In this way, in a same use scenario, for example, a Tik Tok TM small video scenario, when the user manually adjusts a volume, the user may continue to adjust volumes of speakers based on parameters obtained after volume control parameters in a group of preset volume control parameters corresponding to the use scenario are scaled by using a same ratio, so that a sound effect and power consumption of the mobile phone 10 are relatively good.

In a possible implementation of the first aspect, an architecture of the electronic device includes an application layer, an application framework layer, and a software/hardware abstraction layer, a native native layer, and a smart power amplifier smartPA layer; and the output volumes of the first speaker and the second speaker are adjusted by any one of the application layer, the application framework layer, the software/hardware abstraction layer, the native native layer, and the smartPA layer based on volume control parameters corresponding to use scenarios.

In a possible implementation of the first aspect, the method further includes: obtaining to-be-played target audio, where the first volume control parameter and the second volume control parameter are obtained when the target audio is obtained; and playing the target audio based on the first speaker whose output volume is adjusted based on the first volume control parameter and the second speaker whose output volume is adjusted based on the second volume control parameter. An audio (audio) broadcast process of audio relates to a plurality of layers, including the application layer, the framework layer, the native layer, the HAL layer, the smartPA layer, and the like. In this application, a volume control parameter adjustment process corresponding to the dual speakers may be processed at any layer.

According to a second aspect, an embodiment of this application provides a speaker management apparatus, where the apparatus is applied to an electronic device, and the electronic device includes at least a first speaker and a second speaker. The apparatus includes: a determining module, configured to determine that the electronic device is in a first use scenario; and an adjustment module, configured to: adjust an output volume of the first speaker based on a first volume control parameter that is of the first speaker and that corresponds to the first use scenario, and adjust an output volume of the second speaker based on a second volume control parameter that is of the second speaker and that corresponds to the first use scenario, where the first volume control parameter is different from the second volume control parameter.

In a possible implementation of the second aspect, the apparatus further includes: a detection module, configured to detect that the electronic device is switched from the first use scenario to a second use scenario; and the adjustment module is further configured to: adjust the output volume of the first speaker based on a third volume control parameter that is of the first speaker and that corresponds to the second use scenario, and adjust the output volume of the second speaker based on a fourth volume control parameter that is of the second speaker and that corresponds to the second use scenario, where the third volume control parameter is different from the fourth volume control parameter.

In a possible implementation of the second aspect, the use scenario of the electronic device includes at least one of an application running state and a device orientation of the electronic device.

In a possible implementation of the second aspect, the application running state includes at least one of the following: a music application running state, a video application running state, and a navigation application running state; and the device orientation includes at least one of the following: landscape, portrait, and being handheld.

In a possible implementation of the second aspect, power consumption of the first speaker is better than power consumption of the second speaker, and the first volume control parameter is greater than the second volume control parameter.

In a possible implementation of the second aspect, the first volume control parameter and the second volume control parameter belong to one of a plurality of groups of preset volume control parameters, the first use scenario is one of a plurality of preset use scenarios, the plurality of groups of preset volume control parameters are in a one-to-one correspondence with the plurality of preset use scenarios, one volume control parameter in each group of preset volume control parameters uniquely corresponds to one speaker in the electronic device, and overall power consumption and a sound effect of the electronic device match a corresponding preset use scenario after output volumes of corresponding speakers in the electronic device are adjusted based on any one group of preset volume control parameters.

In a possible implementation of the second aspect, the apparatus further includes: a receiving module, configured to receive a volume adjustment instruction of a user, where the volume adjustment instruction is used to indicate a volume scaling factor; and the adjustment module is further configured to: when the electronic device is in the first use scenario, based on the volume scaling factor, adjust, to a fifth volume adjustment parameter, the first volume control parameter corresponding to the first use scenario, and adjust, to a sixth volume adjustment parameter, the second volume control parameter corresponding to the first use scenario; and readjust the output volume of the first speaker based on the fifth volume control parameter, and readjust the output volume of the second speaker based on the sixth volume control parameter.

In a possible implementation of the second aspect, an architecture of the electronic device includes an application layer, an application framework layer, and a software/hardware abstraction layer, a native native layer, and a smart power amplifier smartPA layer; and the output volumes of the first speaker and the second speaker are adjusted by any one of the application layer, the application framework layer, the software/hardware abstraction layer, the native native layer, and the smartPA layer based on volume control parameters corresponding to use scenarios.

In a possible implementation of the second aspect, the apparatus further includes: an obtaining module, configured to obtain to-be-played target audio, where the first volume control parameter and the second volume control parameter are obtained when the target audio is obtained; and a play module, configured to play the target audio based on the first speaker whose output volume is adjusted based on the first volume control parameter and the second speaker whose output volume is adjusted based on the second volume control parameter.

According to a third aspect, an embodiment of this application provides a readable medium, where the readable medium stores instructions, and when the instructions are executed on an electronic device, the electronic device is enabled to perform the speaker management method according to any one of the first aspect or the possible implementations of the first aspect.

According to a fourth aspect, an embodiment of this application provides an electronic device, including: a memory, configured to store instructions to be executed by one or more processors of the electronic device, and a processor, being one of the processors of the electronic device and configured to perform the speaker management method according to any one of the first aspect or the possible implementations of the first aspect.

### BRIEF DESCRIPTION OF DRAWINGS

FIG. 1A is a schematic diagram of a speaker management scenario according to some embodiments of this application;
FIG. 1B is a schematic diagram of relationships between decibels and power consumptions of an upper speaker and a lower speaker in a mobile phone according to some embodiments of this application;
FIG. 1C is a schematic diagram of a speaker management scenario according to some embodiments of this application;
FIG. 1D is a schematic diagram of a speaker management scenario according to some embodiments of this application;
FIG. 2 is a schematic diagram of a structure of a mobile phone according to some embodiments of this application;
FIG. 3 is a block diagram of a software structure of a mobile phone according to some embodiments of this application;
FIG. 4 is a schematic diagram of a speaker management scenario according to some embodiments of this application;
FIG. 5 is a schematic flowchart of a speaker management method according to some embodiments of this application;
FIG. 6A and FIG. 6B are a schematic flowchart of a speaker management method according to some embodiments of this application;
FIG. 7 is a schematic diagram of a structure of a speaker management apparatus according to some embodiments of this application; and
FIG. 8 is a block diagram of a system according to some embodiments of this application.

### DESCRIPTION OF EMBODIMENTS

Illustrative embodiments of this application include but are not limited to a speaker management method, a medium, and an electronic device.

In some embodiments, the electronic device provided in the embodiments of this application has a plurality of speakers, for example, dual speakers. For example, an electronic device applicable to this application may include but is not limited to a mobile phone, a tablet computer, a video camera, a camera, a desktop computer, a laptop computer, a handheld computer, a notebook computer, a desktop computer, an ultra-mobile personal computer (ultra-mobile personal computer, UMPC), a netbook, a cellular phone, a personal digital assistant (personal digital assistant, PDA), an augmented reality (augmented reality, AR)\virtual reality (virtual reality, VR) device, a media player, a smart TV, a smart speaker, a smartwatch, and the like.

It may be understood that in a running process of the electronic device that has a plurality of speakers in this application, a user considers battery life experience. Different speakers in the electronic device generally have different performance, that is, different speakers have different power consumption when outputting volumes with a same decibel. Power consumption of the electronic device affects a battery life. For example, an increase in power consumption of the electronic device results in shorter battery life duration.

In some embodiments, the speaker management method provided in this application is described by using an example in which the electronic device is the mobile phone 10 with dual speakers shown in FIG. 1A and the dual speakers include the upper speaker 11 and the lower speaker 12.

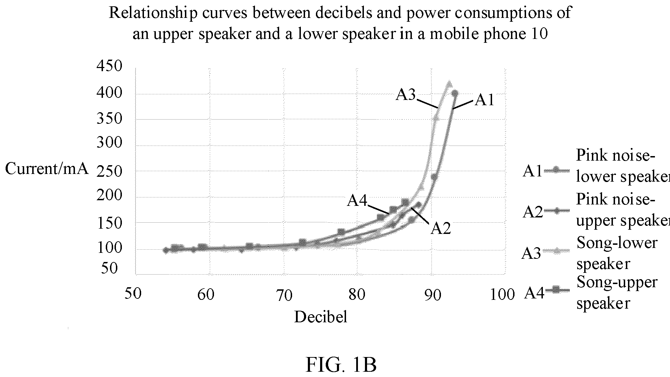

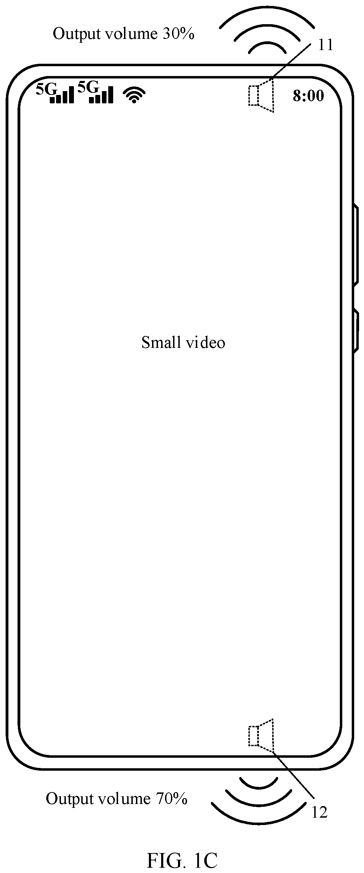

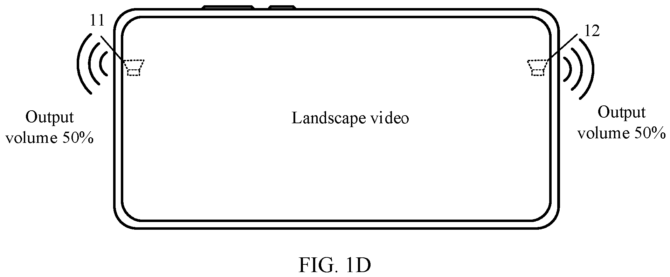

FIG. 1B is a schematic diagram of relationships between decibels and power consumptions of an upper speaker and a lower speaker in a mobile phone 10 according to an embodiment of this application. In a coordinate system shown in FIG. 1B, a horizontal coordinate is a decibel (dB), and a vertical coordinate is a current (in a unit of milliamp (mA)). The decibel is used to indicate a level of an output volume of a speaker, and a larger decibel indicates a larger volume. The current is used to indicate power consumption of the speaker, and a larger current value indicates higher power consumption of a corresponding speaker. Specifically, the coordinate system shown in FIG. 1 includes relationship curves A1-A4.

The relationship curve A1 is used to represent a relationship in which the current varies with the decibel when the lower speaker 12 plays pink noise, and the relationship curve A2 is used to represent a relationship in which the current varies with the decibel when the upper speaker 11 plays pink noise. It is clear that when pink noise with a same decibel is output, a current generated by the upper speaker 11 is far greater than a current generated by the lower speaker 12, and the current generated by the upper speaker 11 is greater than the current generated by the lower speaker 12, that is, power consumption generated by the upper speaker 11 is greater than power consumption generated by the lower speaker 12. In addition, the relationship curve A3 is a relationship in which the current varies with the decibel when the lower speaker 12 plays a song, and the relationship curve A4 is a relationship in which the current varies with the decibel when the upper speaker 11 plays a same song. It is clear that when a same song with a same decibel is output, a current generated by the upper speaker 11 is greater than a current generated by the lower speaker 12, that is, power consumption generated by the upper speaker 11 is greater than power consumption of the lower speaker 12. It may be understood that when a same volume decibel is output, a maximum difference between currents of different speakers is 25 mA. In this case, when the dual speakers shown in FIG. 1B are adjusted to volumes with a same decibel (for example, 50 to 90 decibels) by using a same volume control parameter, power consumption of the upper speaker 11 is greater than power consumption of the lower speaker 12, resulting in relatively large overall power consumption of the mobile phone 10. In addition, the pink noise is generally used for acoustic testing, to test performance of a device such as a speaker.

In some embodiments, the foregoing speaker management method may be applied to a scenario in which the user plays audio out by using the electronic device. The electronic device may play audio out in various application running states, and manage the speaker. For example, the foregoing application running state may include a music application running state (for example, a music play scenario), a video application running state (for example, a video playback scenario), a short video application running state (for example, a short video playback scenario), and a navigation application running state (for example, a navigation scenario). In addition, the foregoing application running state may be determined by using an application running in foreground of the electronic device. The video playback scenario may be a scenario in which a video with relatively large duration is played, for example, a play scenario of a video application such as Youku TM. A short video (small video) play scenario may include, for example, a Tik Tok TM small video scenario and a gallery video playback scenario.

It may be understood that, in different application running states, the user generally has different sound effect requirements and different battery life requirements on the electronic device. For example, in a Tik Tok TM application running state, namely, in a state in which a short video is played, the user does not have a high sound effect requirement, and has a relatively high battery life requirement. However, in a Youku TM application running state, namely, in a video playback state, when watching a movie in a landscape mode by using the electronic device, the user has a relatively high sound effect requirement on the electronic device, but does not have a high battery life requirement. For another example, in a navigation application running state, namely, in a navigation state, the user may need to consider both a sound effect and a battery life. In this way, when different speakers in the electronic device output volumes, requirements of the user in different application running states may be considered.

In some embodiments, in a scenario in which the user plays audio out by using the electronic device, the electronic device may be in different orientations, such as landscape, portrait, or being handheld. Due to different orientations of the electronic device, positions of speakers relative to the human ear are different, and different sound effects are generated, for example, different levels of volumes are perceived by the user. In this case, for the output volumes of different speakers in the electronic device, the positions of the speakers relative to the human ear in different orientations may be considered.

To resolve a problem that power consumption is relatively large when a plurality of speakers play audio out, the embodiments of this application provide a speaker management method. For an electronic device that has a plurality of speakers, because a user has different sound effect performance requirements and different battery life requirements on the electronic device in different use scenarios, for use scenarios, for example, with different application running states and/or different device orientations, a corresponding group of preset volume control parameters that meets optimal power consumption may be preset for each use scenario. Each preset volume control parameter includes a plurality of volume control parameters that are in a one-to-one correspondence with the plurality of speakers. Then, when a use scenario is switched, the electronic device may adjust volumes of the plurality of speakers based on preset volume control parameters corresponding to a use scenario obtained after switching, that is, adjust a volume of a corresponding speaker based on each volume control parameter in the preset volume control parameters. Therefore, volume control parameters of speakers may be adjusted with reference to a change of an application running state and a change of a device orientation of the electronic device, instead of always adjusting volumes of different speakers based on a same volume control parameter. In this way, overall energy consumption of the electronic device in some scenarios can be effectively optimized, and it can be ensured that total sound intensity of the electronic device meets a requirement. For example, for the upper speaker and the lower speaker in the mobile phone, compared with a manner in a conventional technology in which the dual speakers output a same volume, in some scenarios (for example, a short video playback scenario in which a sound effect requirement is not high and a battery life requirement is relatively high) in this application, an output volume of a speaker with relatively good power consumption may be increased, and an output volume of a speaker with relatively poor power consumption may be reduced, but an overall sound pressure is not reduced, so that both sound effect experience and power consumption performance are considered, thereby improving overall battery life performance of the device.

As an example, in a Tik Tok TM small video scenario, the user requires relatively long battery life duration. In this case, the electronic device may preferentially use a speaker with better power consumption, that is, set a volume adjustment parameter of a speaker with relatively good power consumption to be greater than an adjustment parameter of a speaker with relatively poor power consumption, so that the speaker with relatively good power consumption (namely, relatively small power consumption) has a relatively large volume, and the speaker with relatively poor power consumption (namely, relatively large power consumption) has a relatively small volume, so that overall sound intensity meets a requirement (for example, meets a volume that is set by the user). Therefore, overall power consumption of the plurality of speakers is reduced, and battery life duration is increased. As shown in FIG. 1C, in the Tik Tok TM small video scenario, a volume that is output by the upper speaker 11 of the mobile phone 10 accounts for 30% of an overall volume, for example, a volume control parameter corresponding to the upper speaker 11 is 30%. Correspondingly, a volume that is output by the lower speaker 12 of the mobile phone 10 accounts for 70% of the total volume, for example, a volume control parameter corresponding to the lower speaker 12 is 70%. Therefore, a speaker with higher efficiency is used as a main sound source output.

As another example, in a video playback scenario such as Youku TM, when the user watches a movie in a landscape mode by using the mobile phone 10, volumes of the upper speaker and the lower speaker in the mobile phone 10 may be basically consistent, that is, volume control parameters of the upper speaker and the lower speaker are set to a same volume control parameter or two volume control parameters with a relatively small difference, so as to obtain better sound effect experience. As shown in FIG. 1D, in a landscape movie watching (namely, a landscape video) scenario, a volume that is output by the upper speaker 11 of the mobile phone 10 accounts for 50% of a total volume, and a volume that is output by the lower speaker 12 accounts for 50% of the total volume. In this case, volume control parameters corresponding to both the upper speaker and the lower speaker may be 50%. Therefore, volumes on left and right sides are consistent, and a stereo effect is further optimized.

It may be understood that, corresponding to each use scenario, for example, a navigation scenario, a person skilled in the art may test power consumption and effect experience in advance in a laboratory, and formulate volume control parameters in the navigation scenario. The parameters are directly configured in a configuration file of the mobile phone 10. Further, in the navigation scenario, a preset group of volume control parameters in the configuration file are directly delivered, to implement volume adjustment of a plurality of speakers. Correspondingly, a group of preset volume control parameters corresponding to another preset use scenario may be set when power consumption and effect experience are tested in the laboratory.

In some embodiments, the volume control parameter provided in this embodiment of this application may be a volume discount coefficient. As an example, a manufacturer may generally perform discount processing (that is, reduce a volume) on an output volume of the electronic device, and a discount degree is the volume discount coefficient, namely, a discount ratio. In addition, in some other embodiments, the volume control parameter may alternatively be used to increase a volume. More specifically, for a speaker, the volume control parameter is a software parameter, and an audio device (namely, speaker hardware) specification further needs to be considered for an actual volume output.

Next, a structure of the electronic device is described by using an example in which the electronic device applicable to the speaker management method in the embodiments of this application is a mobile phone.

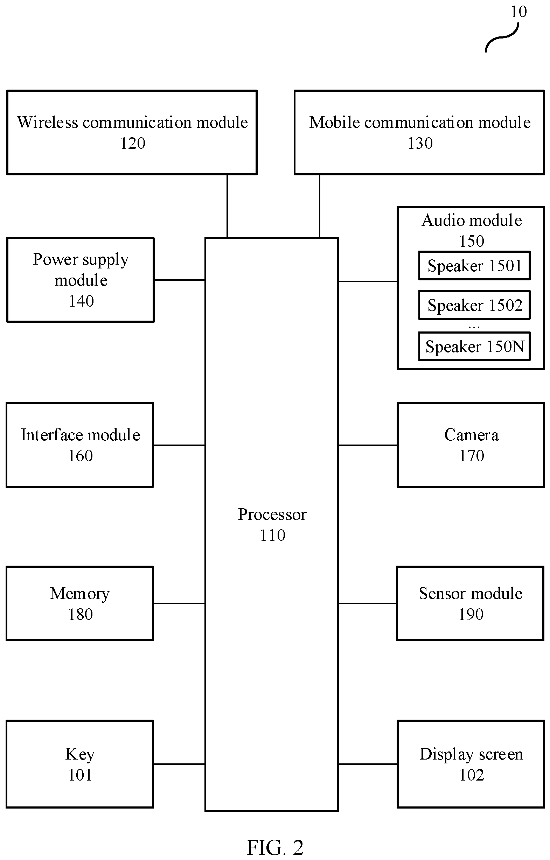

FIG. 2 is a schematic diagram of a structure of a mobile phone according to an embodiment of this application. As shown in FIG. 2, the mobile phone 10 may include a processor 110, a power supply module 140, a memory 180, a mobile communication module 130, a wireless communication module 120, a sensor module 190, an audio module 150, a camera 170, an interface module 160, a key 101, a display screen 102, and the like.

It may be understood that the structure shown in this embodiment of the present invention does not constitute a specific limitation on the mobile phone 10. In some other embodiments of this application, the mobile phone 10 may include more or fewer components than those shown in the figure, or combine some components, or split some components, or have different component arrangements. The components shown in the figure may be implemented by hardware, software, or a combination of software and hardware.

The processor 110 may include one or more processing units, for example, a processing module or a processing circuit of a central processing unit (Central Processing Unit, CPU), a graphics processing unit (Graphics Processing Unit, GPU), a digital signal processor (Digital Signal Processing, DSP), a micro control unit MCU (Micro-programmed Control Unit), an artificial intelligence (Artificial Intelligence, AI) processor, or a field programmable gate array (Field Programmable Gate Array, FPGA). Different processing units may be independent devices, or may be integrated into one or more processors. A storage unit may be disposed in the processor 110, to store instructions and data. In some embodiments, the storage unit in the processor 110 is a cache memory 180. For example, the memory 180 is configured to store a plurality of groups of preset volume control parameters that are in a one-to-one correspondence with a plurality of use scenarios. Further, the processor 110 may determine a corresponding group of preset volume control parameters based on a use scenario such as an application running state and a device orientation of the electronic device, and separately adjust volumes of corresponding speakers based on volume control parameters.

The power supply module 140 may include a power supply, a power management component, and the like. The power supply may be a battery. The power management module is configured to: manage charging of the power supply, and supply power from the power supply to another module. In some embodiments, the power management component includes a charging management module and a power management module. The charging management module is configured to receive a charging input from a charger. The power management module is configured to connect the power supply, the charging management module, and the processor 110. The power management module receives an input from the power supply and/or an input from the charging management module, to supply power to the processor 110, the display screen 102, the camera 170, the wireless communication module 120, and the like.

The mobile communication module 130 may include but is not limited to an antenna, a power amplifier, a filter, a low noise amplifier (Low noise amplify, LNA), and the like. The mobile communication module 130 may provide a solution for wireless communication including 2G/3G/4G/5G and the like applied to the mobile phone 10. The mobile communication module 130 may receive an electromagnetic wave by using the antenna, perform processing such as filtering or amplification on the received electromagnetic wave, and transmit a processed electromagnetic wave to the modem processor for demodulation. The mobile communication module 130 may further amplify a signal modulated by the modem processor, and convert the signal into an electromagnetic wave by using the antenna for radiation.

The wireless communication module 120 may include an antenna, and send/receive an electromagnetic wave by using the antenna. The wireless communication module 120 may provide a solution for wireless communication including a wireless local area network (wireless local area networks, WLAN) (for example, a wireless fidelity (wireless fidelity, Wi-Fi) network), Bluetooth (Bluetooth, BT), a near field communication (near field communication, NFC) technology, an infrared (infrared, IR) technology, and the like applied to the mobile phone 10. The mobile phone 10 may communicate with a network and another device by using a wireless communication technology.

In some embodiments, the mobile communication module 130 and the wireless communication module 120 of the mobile phone 10 may be alternatively located in a same module.

The display screen 102 is configured to display a human-computer interaction interface, an image, a video, and the like. As an example, the display screen 102 may display a UI interface such as a home screen, and may further display interfaces of various applications, such as an interface of a gallery application and an interface of a video application.

The sensor module 190 may include an optical proximity sensor, a pressure sensor, a gyroscope sensor, and the like.

The audio module 150 is configured to convert digital audio information into an analog audio signal for output, or is configured to convert an analog audio input into a digital audio signal. In some embodiments, the audio module 150 may include speakers 1501~150N, an earpiece, a microphone, and a headset jack. Volume adjustment may be performed on the speakers 1501~150N based on volume control parameters thereof in conjunction with hardware.

The camera 170 is configured to capture a still image or a video. The mobile phone 10 may implement a photographing function by using an ISP, the camera 170, a video codec, the GPU, the display screen 102, the application processor, and the like.

The interface module 160 includes an external memory interface, a universal serial bus (universal serial bus, USB) interface, a subscriber identity module (subscriber identification module, SIM) card interface, and the like.

In some embodiments, the mobile phone 10 further includes the key 101, a motor, an indicator, and the like. The key 101 may include a volume key, an on/off key, and the like. The motor is configured to enable the mobile phone 10 to produce a vibration effect. The indicator may include a laser indicator, a radio frequency indicator, an LED indicator, and the like.

In some embodiments, a software system of the mobile phone 10 may use a layered architecture, an event-driven architecture, a microkernel architecture, a micro service architecture, or a cloud architecture. In this embodiment of this application, an Android TM system of a layered architecture is used as an example to describe the software structure of the mobile phone 10.

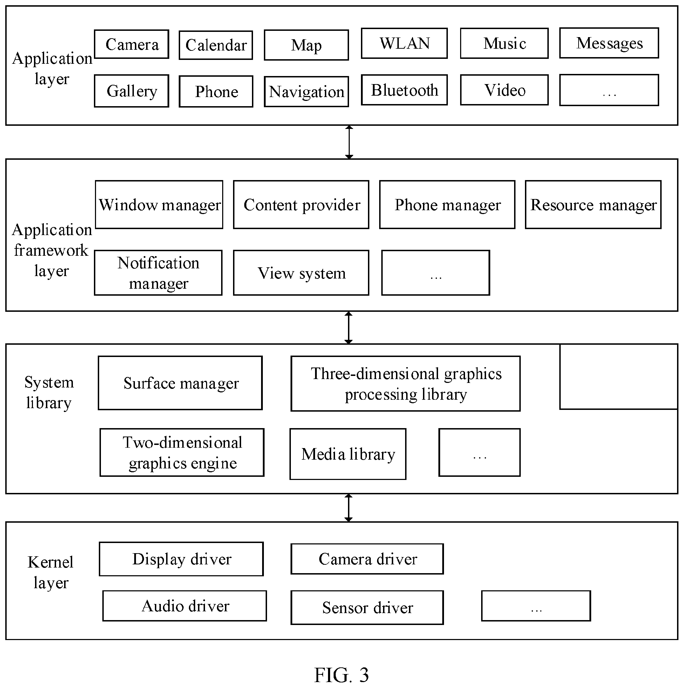

FIG. 3 is a block diagram of a software structure of a mobile phone 10 according to an embodiment of this application.

In a layered architecture, software is divided into several layers, and each layer has a clear role and task. The layers communicate with each other by using software interfaces. In some embodiments, the Android system is divided into four layers, which are respectively an application layer (namely, an application layer), an application framework layer (namely, a Framework layer), an Android runtime (Android runtime) and a system library, and a kernel layer from top to bottom.

The application layer may include a series of application packages.

As shown in FIG. 3, the application packages may include applications such as Camera, Gallery, Calendar, Phone, Map, Navigation, WLAN, Bluetooth, Music, Video, and Messages. It may be understood that an application (Application, APP) such as music and video may be used to generate audio data, and is referred to as a broadcast APP.

The application framework layer provides an application programming interface (Application Programming Interface, API) and a programming framework for applications at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display screen, determine whether a status bar exists, lock a screen, take a screenshot, and the like.

The content provider is configured to store and obtain data, and enable the data to be accessible to an application. The data may include a video, an image, audio, calls that are made and answered, browsing history and bookmarks, a phone book, and the like.

The view system includes visual controls, for example, a control for displaying a text and a control for displaying a picture. The view system may be configured to build an application. A display interface may include one or more views. For example, a display interface including an SMS message notification icon may include a view for displaying a text and a view for displaying a picture.

The phone manager is configured to provide a communication function of the mobile phone 10, for example, call status management (including answering, hanging up, and the like).

The resource manager provides various resources for the application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to notify download completion, provide a message notification, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert tone is produced, the electronic device vibrates, or an indicator light blinks.

The Android Runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video coding formats, for example, MPEG4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In addition, in addition to the software architecture shown in FIG. 3, the mobile phone 10 provided in this embodiment of this application further includes another layer structure, such as a hardware abstraction layer (Hardware Abstraction Layer, HAL) layer and a hardware layer.

The HAL layer is an interface layer located between an operating system kernel (namely, the kernel layer shown in FIG. 3) and a hardware circuit, and is intended to abstract hardware. From the perspective of testing of software and hardware, testing of software and hardware may be separately completed based on the hardware abstraction layer, making parallel testing of software and hardware possible.

The hardware layer of the mobile phone 10 may include the display screen 102, the camera 170, the speakers 1501~150N, the sensor 190, and the like that are shown in FIG. 1.

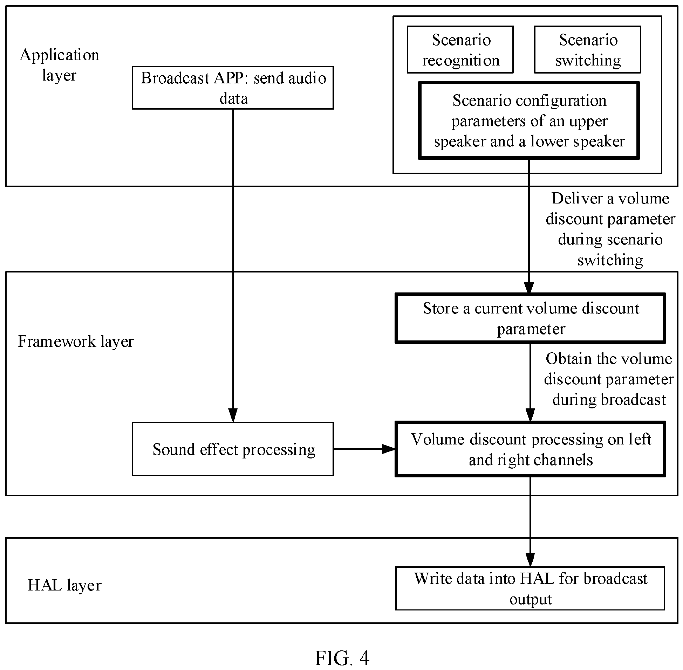

Further, FIG. 4 is a schematic diagram of a speaker management scenario according to an embodiment of this application. As shown in FIG. 4, the application layer of the mobile phone 10 may include a broadcast APP such as the music application and the video application that are shown in FIG. 3, and may be specifically an application used to provide audio data, for example, Youku TM and Tik Tok TM. Further, the broadcast APP may send the audio data to the Framework layer in the mobile phone 10. In addition, the application shown in FIG. 4 is further used to perform scenario recognition and scenario switching. That is, used to recognize a use scenario and detect switching of the use scenario. For example, the application layer may recognize that a current use scenario is a Tik Tok TM small video scenario or a scenario in which a user watches a movie in a landscape mode, and the application layer may switch the current use scenario from the Tik Tok TM small video scenario to a landscape movie watching scenario, and detects that scenario switching occurs. In addition, the application layer is further used to obtain scenario configuration parameters of the upper speaker and the lower speaker in the mobile phone 10, namely, a group of preset volume control parameters corresponding to the current use scenario.

It may be understood that, at the application layer shown in FIG. 4, a body that performs scenario recognition, detects scenario switching, and obtains the scenario configuration parameters of the upper speaker and the lower speaker may be an independent third-party application at the application layer, or may be a function component in a setting application. This is not specifically limited in this embodiment of this application. In addition, at the application layer, scenario switching may be completed through switching of different application scenarios and switching of device orientations. For example, when the user closes a Tik Tok TM small video, and opens Youku TM to watch a movie in a landscape state, scenario switching is completed.

Further, as shown in FIG. 4, the Framework layer in the mobile phone 10 may receive a volume discount parameter (namely, a volume control parameter) delivered by the application layer during scenario switching, and store a current volume discount parameter, which includes a group of preset volume parameters including volume parameters corresponding to speakers. In addition, the Framework layer may receive the audio data sent by the broadcast APP at the application layer, and perform sound effect processing on the audio data to obtain to-be-played audio data. Further, when playing the audio data, the mobile phone 10 obtains the current volume discount parameter, and performs volume discount processing on left and right channels of the audio data, that is, performs volume discount processing on both the upper speaker and the lower speaker based on corresponding volume discount parameters. Further, audio data obtained after volume discount processing is written into the HAL layer of the mobile phone 10, to output processed audio data, so that broadcast output is completed. In this case, volumes that are output by the upper speaker and the lower speaker in the mobile phone 10 are adjusted based on corresponding volume discount parameters. Therefore, overall sound intensity of the upper speaker and the lower speaker meets a requirement, and overall power consumption is relatively low.

In some embodiments, a configuration library may be disposed in this embodiment of this application, to store a group of preset volume control parameters corresponding to each use scenario. The configuration library may be set on a cloud device, or configured in storage space of the mobile phone 10, for example, the memory 180 shown in FIG. 2. For example, the cloud device may push a speaker configuration to the mobile phone 10 through cloud-based push and upgrade. In this case, during scenario switching, the mobile phone 10 may obtain, from the cloud, a group of preset volume control parameters corresponding to a use scenario obtained after switching.

In addition, in some embodiments, layers of the mobile phone 10 include not only the application layer, the framework layer, and the HAL layer, but may also include a native (native) layer (also referred to as a native service), a smart power amplifier (smartPA) layer, and the like. An audio (audio) broadcast process of audio relates to a plurality of layers, including the application layer, the framework layer, the native layer, the HAL layer, the smartPA layer, and the like. In this application, when a dual-channel audio flow discount solution corresponding to the dual speakers may be processed at any layer, an audio discount effect may be implemented. That is, in this application, a volume control parameter adjustment process corresponding to a plurality of speakers in the electronic device may be processed at any layer.

It may be understood that only the application running state is considered in some preset use scenarios in a plurality of preset scenarios, and not only the application running state but also the device orientation are considered in some other preset use scenarios.

Reference is made to Table 1, which is an example of a relationship between a use scenario and volume control parameters of the upper speaker and the lower speaker according to an embodiment of this application. L1 represents the volume control parameter of the lower speaker 12 in the mobile phone 10, and L2 represents the volume control parameter of the upper speaker 11 in the mobile phone 10. It may be learned from FIG. 1 that power consumption of the upper speaker 11 in the mobile phone 10 is worse, and power consumption of the lower speaker 12 is better. In this case, a relationship between a use scenario and a volume control parameter may be set based on battery life requirements and sound effect requirements of the user on the mobile phone 10 in different use scenarios, as shown in Table 1.

**Table 1:**

| Preset use scenario | Application running state | Device orientation | Preset relationship between volume control parameters of an upper speaker and a lower speaker |
|---|---|---|---|
| Small video scenario | Tik Tok^{™} | - | L1 is greater than the parameter L2 |
| Landscape video playback scenario | Video play scenario of a video application such as Youku^{™} | Landscape | L1 is equal to the parameter L2 |
| Portrait video playback scenario | Video play scenario of a video application such as Youku^{™} | Portrait | L1 is greater than the parameter L2 |
| Portrait video | Video play scenario of a | Handheld | L1 is greater than the parameter |
| playback scenario | video application such as Youku^{™} | | L2 |
| Navigation scenario | Navigation application | - | L1 is greater than the parameter L2 |

In different use scenarios shown in Table 1, L1 may be different, L2 may also be different, and L1 and L2 may be preset based on a comprehensive experimental result of a sound effect and power consumption. A specific value is not limited in this application, and may be set based on an actual requirement.

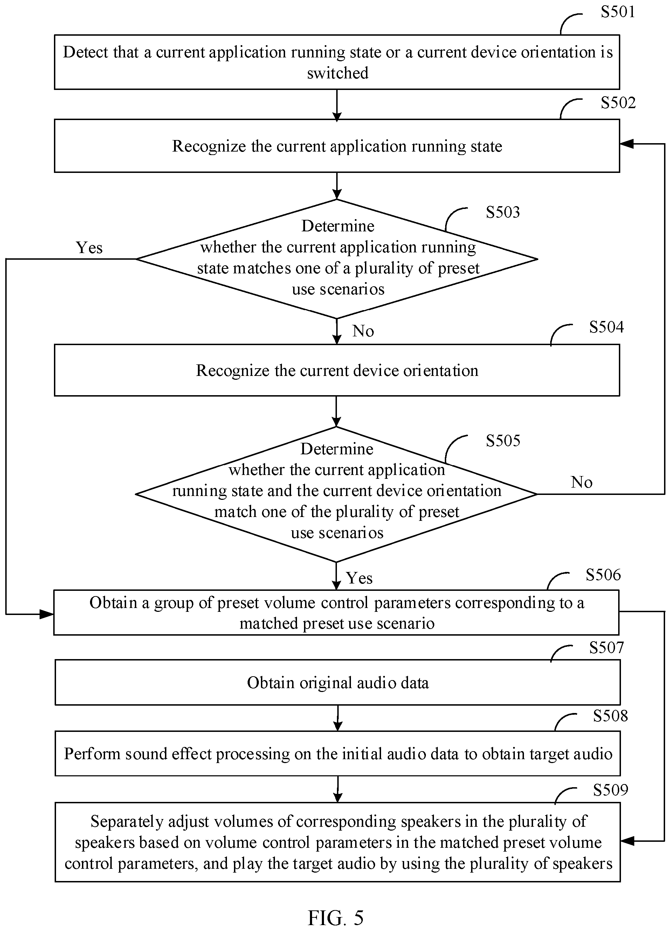

Next, a process of a speaker management method shown in FIG. 5 is described in detail based on an example of the plurality of speakers in the mobile phone 10 shown in FIG. 2 being an upper speaker and a lower speaker and the use scenario shown in Table 1. The method may be performed by the mobile phone 10, the processor 110 in the mobile phone 10, or an apparatus or a module that is in the mobile phone 10 and that is configured to perform speaker management.

Specifically, as shown in FIG. 5, the method includes the following steps.

S501: Detect that a current application running state or a current device orientation is switched.

For example, the mobile phone 10 may determine, by detecting that an application running in foreground is switched, that the application running state is switched, and determine, by detecting that a parameter of a sensor such as a gyroscope and an accelerometer changes, that the device orientation is switched.

S502: Recognize the current application running state.

S503: Determine whether the current application running state matches one of a plurality of preset use scenarios. If yes, the method proceeds to S506. If no, the method proceeds to S504 to continue to perform determining on the current use scenario.

For example, referring to Table 1, the mobile phone 10 may determine whether the current running state is a preset use scenario in which a device orientation is not considered and that are in the plurality of use scenarios, such as a navigation scenario or a small video playback scenario.

S504: Recognize the current device orientation.

For example, the mobile phone 10 may detect the device orientation of the mobile phone 10 by using a real-time parameter of a sensor such as a gyroscope and an accelerometer.

S505: Determine whether the current application running state and the current device orientation match one of the plurality of preset use scenarios. If yes, the method proceeds to S506. If no, the method proceeds to S502 to continue to perform determining on the current use scenario again. Similarly, still referring to Table 1, the mobile phone 10 may determine, by combining the current running state and the current device orientation, whether the current use scenario is one preset use scenario in the plurality of use scenarios, such as a landscape video scenario.

S506: Obtain a group of preset volume control parameters corresponding to a matched preset use scenario.

S507: Obtain original audio data. The foregoing original audio data may be audio data collected in real time by the mobile phone 10, or may be audio data obtained in real time from a network or locally.

S508: Perform sound effect processing on the initial audio data to obtain target audio.

As an example, the foregoing sound effect processing may be adding a reverberation effect, a voice change effect, or the like. For example, when an application running in foreground of the mobile phone 10 is a livestreaming room of a singing type, a livestreamer sings along with background music. In this case, some livestreamers want to add the reverberation effect to voice thereof, to create an atmosphere of singing in an environment such as a theatre. For another example, if there are some livestreaming rooms of a comedy type, a livestreamer wants to add the sound change effect to voice thereof, for example, change female voice to male voice, change male voice to female voice, or becomes robotic voice.

In some other examples, the target audio is original audio indicated by the original audio data.

In addition, in some other embodiments, in the speaker management method provided in this application, S507 and S508 may alternatively be performed before S501 to S506. This is not specifically limited in this embodiment of this application.

S509: Separately adjust volumes of corresponding speakers in the plurality of speakers based on volume control parameters in the matched preset volume control parameters, and play the target audio by using the plurality of speakers.

In some embodiments, the target audio may be original audio (namely, original audio represented by the original audio data), or may be audio obtained through processing in steps 507-508.

In some embodiments, each use scenario in this application is corresponding to a default volume, namely, a volume that matches a user habit in the use scenario. When the mobile phone 10 is switched from a use scenario to another use scenario, an overall volume of the mobile phone 10 may be adjusted to a corresponding default volume based on a group of volume control parameters corresponding to the another use scenario. In this case, the user does not need to manually adjust the volume. For example, a default volume corresponding to a navigation scenario is greater than a default volume corresponding to a Tik Tok TM small video scenario. In this case, when the current use scenario is switched from the navigation scenario to the Tik Tok TM small video scenario, the mobile phone 10 may adjust the volume control parameters of the speakers and automatically reduce the volume.

It may be understood that, as shown in FIG. 4, when playing the target audio, the mobile phone 10 may obtain a corresponding group of preset volume control parameters. Further, volumes of an upper speaker and a lower speaker may be adjusted based on the group of preset volume control parameters, that is, volumes of left and right channels of the mobile phone 10 may be adjusted. Specifically, the volume control parameters corresponding to the speakers may be separately delivered to a HAL layer, to output the target audio based on adjusted volumes of the speakers.

In some embodiments, the mobile phone 10 may perform, based on the volume control parameter by using any one of an application layer, a framework layer, a native layer, the HAL layer, and a smartPA layer, volume adjustment such as volume discount processing on a corresponding speaker.

Therefore, in the foregoing method, determining may be performed on the current use scenario by combining the current application running state and the current device orientation, and when the current use scenario is a preset use scenario, the volumes of the speakers are separately adjusted based on volume control parameters in a corresponding group of preset volume control parameters. The preset volume control parameters are obtained through experiment by comprehensively considering a sound effect and power consumption of the device in the preset use scenario, so that the sound effect and power consumption of the mobile phone 10 in the speaker management process in the current use scenario are optimal.

In addition, in some other embodiments, after the use scenario is switched, the mobile phone 10 may update stored preset volume control parameters to a group of preset volume control parameters corresponding to a new use scenario. In this case, in the new use scenario, the mobile phone 10 may further adjust the volumes of the corresponding speakers simultaneously based on volume control parameters obtained after volume control parameters in the group of preset volume control parameters are changed by using a same ratio.

In some embodiments, based on FIG. 5, the speaker management method provided in this embodiment of this application further includes the following steps:
S601: Receive a volume adjustment instruction of the user, where the volume adjustment instruction includes a volume scaling factor.

S602: Simultaneously scale, based on the received volume scaling speed, volume control parameters in a group of preset volume control parameters corresponding to a current preset use scenario.

S603. Separately adjust volumes of corresponding speakers based on volume control parameters obtained after scaling, and continue to output the target audio by using the plurality of speakers.

In this way, in a same use scenario, for example, a Tik Tok TM small video scenario, when the user manually adjusts a volume, the user may continue to adjust volumes of speakers based on parameters obtained after volume control parameters in a group of preset volume control parameters corresponding to the use scenario are scaled by using a same ratio, so that a sound effect and power consumption of the mobile phone 10 are relatively good.

In some embodiments, the speaker management method provided in this embodiment of this application may be performed by a speaker management apparatus.

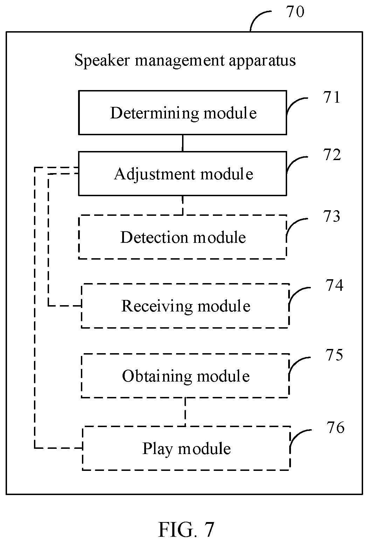

FIG. 7 is a schematic diagram of a structure of a speaker management apparatus according to an embodiment of this application. The speaker management apparatus 70 is applied to an electronic device, and the electronic device includes at least a first speaker and a second speaker. The apparatus 70 includes: a determining module 71, configured to determine that the electronic device is in a first use scenario; and an adjustment module 72, configured to: adjust an output volume of the first speaker based on a first volume control parameter that is of the first speaker and that corresponds to the first use scenario, and adjust an output volume of the second speaker based on a second volume control parameter that is of the second speaker and that corresponds to the first use scenario, where the first volume control parameter is different from the second volume control parameter. For example, the foregoing electronic device may be the foregoing mobile phone 10, the first speaker may be the foregoing lower speaker 12, and the second speaker may be the foregoing upper speaker 11.

In some embodiments, the apparatus 70 further includes: a detection module 73, configured to detect that the electronic device is switched from the first use scenario to a second use scenario; and the adjustment module 72 is further configured to: adjust the output volume of the first speaker based on a third volume control parameter that is of the first speaker and that corresponds to the second use scenario, and adjust the output volume of the second speaker based on a fourth volume control parameter that is of the second speaker and that corresponds to the second use scenario, where the third volume control parameter is different from the fourth volume control parameter.

In some embodiments, the use scenario of the electronic device includes at least one of an application running state and a device orientation of the electronic device.

In some embodiments, the application running state includes at least one of the following: a music application running state, a video application running state, and a navigation application running state; and the device orientation includes at least one of the following: landscape, portrait, and being handheld.

In some embodiments, power consumption of the first speaker is better than power consumption of the second speaker, and the first volume control parameter is greater than the second volume control parameter.

In some embodiments, the first volume control parameter and the second volume control parameter belong to one of a plurality of groups of preset volume control parameters, the first use scenario is one of a plurality of preset use scenarios, the plurality of groups of preset volume control parameters are in a one-to-one correspondence with the plurality of preset use scenarios, one volume control parameter in each group of preset volume control parameters uniquely corresponds to one speaker in the electronic device, and overall power consumption and a sound effect of the electronic device match a corresponding preset use scenario after output volumes of corresponding speakers in the electronic device are adjusted based on any one group of preset volume control parameters.

In some embodiments, the apparatus 70 further includes: a receiving module 74, configured to receive a volume adjustment instruction of a user, where the volume adjustment instruction is used to indicate a volume scaling factor; and the adjustment module 72 is further configured to: when the electronic device is in the first use scenario, based on the volume scaling factor, adjust, to a fifth volume adjustment parameter, the first volume control parameter corresponding to the first use scenario, and adjust, to a sixth volume adjustment parameter, the second volume control parameter corresponding to the first use scenario; and readjust the output volume of the first speaker based on the fifth volume control parameter, and readjust the output volume of the second speaker based on the sixth volume control parameter.

In some embodiments, the apparatus 70 further includes: an obtaining module 75, configured to obtain to-be-played target audio, where the first volume control parameter and the second volume control parameter are obtained when the target audio is obtained; and a play module 76, configured to play the target audio based on the first speaker whose output volume is adjusted based on the first volume control parameter and the second speaker whose output volume is adjusted based on the second volume control parameter.

In addition, in some embodiments, the speaker management apparatus 70 shown in FIG. 7 may include only the determining module 71 and the adjustment module 72 that are shown by a solid line box. In some other embodiments, the speaker management apparatus 70 shown in FIG. 7 includes not only the determining module 71 and the adjustment module 72 that are shown by a solid line box, but also one or more other modules shown by dashed line boxes.

It may be understood that the speaker management apparatus 70 provided in this embodiment of this application is configured to perform related steps of the foregoing speaker management method, and for beneficial effects achieved, refer to descriptions of the method embodiments. Details are not described herein again.

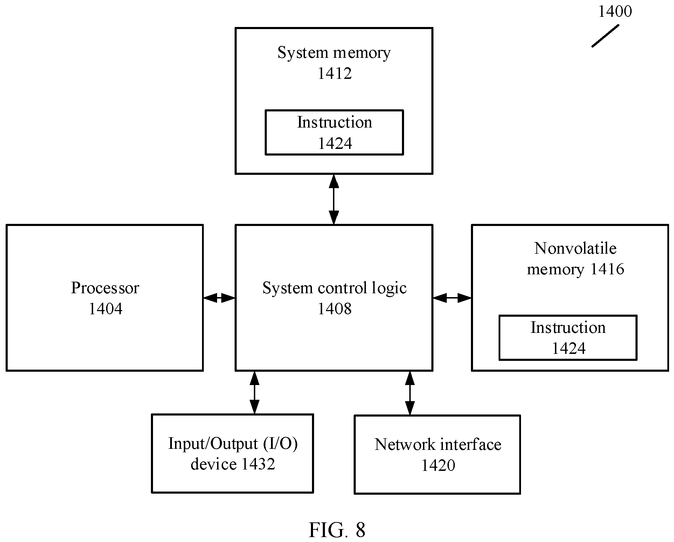

FIG. 8 is a block diagram of a system 1400 according to an embodiment of this application. The system may be configured to implement the speaker management method performed in the embodiments of this application. For example, the system 1400 is deployed in the mobile phone 10, or is deployed outside the mobile phone 10. FIG. 8 schematically shows an example system 1400 according to a plurality of embodiments. In an embodiment, the system 1400 may include one or more processors 1404, system control logic 1408 connected to at least one of the processors 1404, a system memory 1412 connected to the system control logic 1408, a nonvolatile memory (NVM) 1416 connected to the system control logic 1408, and a network interface 1420 connected to the system control logic 1408.

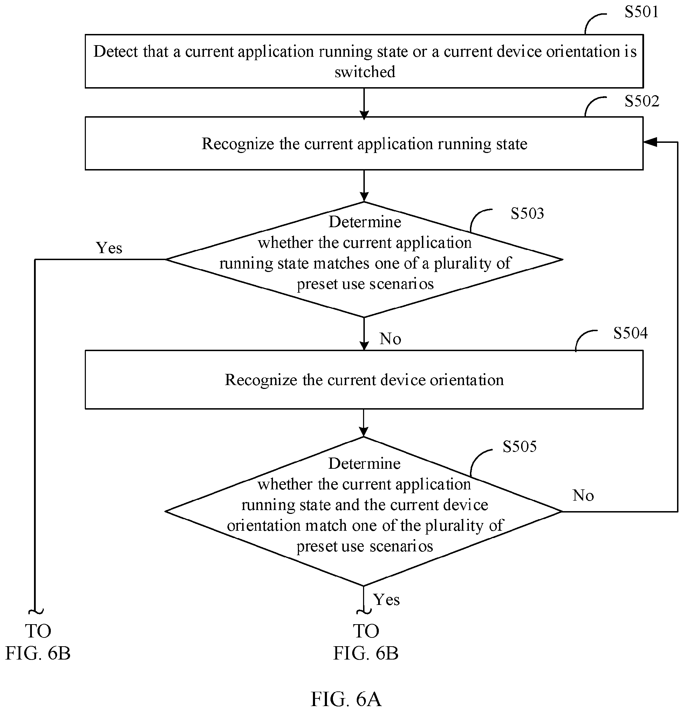

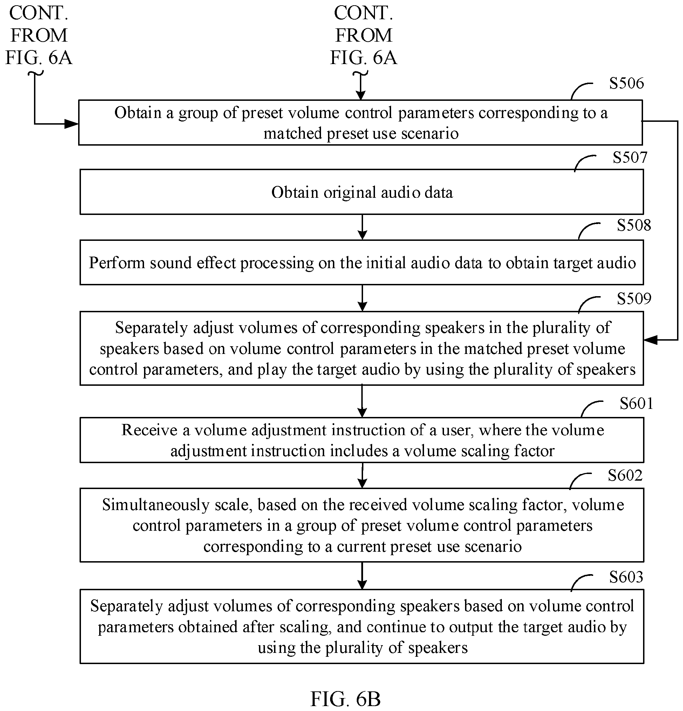

In some embodiments, the processor 1404 may include one or more single-core or multi-core processors. In some embodiments, the processor 1404 may include any combination of a general-purpose processor and a dedicated processor (for example, a graphics processing unit, an application processor, or a baseband processor). In an embodiment of the system 1400 that uses an eNB (Evolved Node B, evolved NodeB) 101 or a RAN (Radio Access Network, radio access network) controller 102, the processor 1404 may be configured to perform various matched embodiments, for example, one or more of the plurality of embodiments shown in FIG. 5 or FIG. 6.

In some embodiments, the system control logic 1408 may include any suitable interface controller to provide any suitable interface to at least one of the processors 1404 and/or any suitable device or component communicating with the system control logic 1408.

In some embodiments, the system control logic 1408 may include one or more memory controllers to provide an interface connected to the system memory 1412. The system memory 1412 may be configured to load and store data and/or instructions. In some embodiments, the memory 1412 of the system 1400 may include any suitable volatile memory, such as a suitable dynamic random access memory (DRAM).

The NVM/memory 1416 may include one or more non-transitory tangible computer-readable media configured to store data and/or instructions. In some embodiments, the NVM/memory 1416 may include any suitable nonvolatile memory such as a flash memory and/or any suitable nonvolatile storage device such as at least one of an HDD (Hard Disk Drive, hard disk drive), a CD (Compact Disc, compact disc) drive, and a DVD (Digital Versatile Disc, digital versatile disc) drive.

The NVM/memory 1416 may include a part of storage resources on an apparatus installed with the system 1400, or may be accessed by a device, but is not necessarily a part of the device. For example, the NVM/memory 1416 may be accessed by using a network via the network interface 1420.

In particular, the system memory 1412 and the NVM/memory 1416 may respectively include a temporary copy and a permanent copy of an instruction 1424. The instruction 1424 may include an instruction that, when executed by at least one of the processors 1404, cause the system 1400 to implement the method shown in FIG. 5 or FIG. 6. In some embodiments, the instruction 1424, hardware, firmware, and/or software components thereof may additionally/alternatively be placed in the system control logic 1408, the network interface 1420, and/or the processors 1404.

The network interface 1420 may include a transceiver configured to provide a radio interface for the system 1400 to communicate with any other suitable device (for example, a front-end module or an antenna) by using one or more networks. In some embodiments, the network interface 1420 may be integrated into another component of the system 1400. For example, the network interface 1420 may be integrated into at least one of the processors 1404, the system memory 1412, the NVM/memory 1416, and a firmware device (not shown) having an instruction. When at least one of the processors 1404 executes the instruction, the system 1400 implements the method shown in FIG. 5 or FIG. 6.

The network interface 1420 may further include any suitable hardware and/or firmware to provide a multi-input multi-output radio interface. For example, the network interface 1420 may be a network adapter, a wireless network adapter, a telephone modem, and/or a wireless modem.

In an embodiment, at least one of the processors 1404 may be packaged with logic of one or more controllers for the system control logic 1408 to form a system in a package (SiP). In an embodiment, at least one of the processors 1404 may be integrated on a same die as logic of one or more controllers for the system control logic 1408 to form a system on chip (SoC).

The system 1400 may further include an input/output (I/O) device 1432. The I/O device 1432 may include a user interface, so that a user can interact with the system 1400. A peripheral component interface is designed, so that a peripheral component can also interact with system 1400. In some embodiments, the system 1400 further includes a sensor, configured to determine at least one of an environment condition and position information that are associated with system 1400.

In some embodiments, the user interface may include but is not limited to a display (such as a liquid crystal display or a touchscreen display), a speaker, a microphone, one or more cameras (such as a still image camera and/or a video camera), a flashlight (such as a light-emitting diode flash), and a keyboard.

In some embodiments, the peripheral component interface may include but are not limited to a nonvolatile memory port, an audio jack, and a power interface.

In some embodiments, the sensor may include but is not limited to a gyroscope sensor, an accelerometer, a proximity sensor, an ambient light sensor, and a positioning unit. The positioning unit may further be a part of the network interface 1420 or interact with the network interface 1420 to communicate with a component (for example, a global positioning system (GPS) satellite) of a positioning network.

Embodiments of mechanisms disclosed in this application may be implemented by using hardware, software, firmware, or a combination of these implementation methods. The embodiments of this application may be implemented as a computer program or program code executed on a programmable system. The programmable system includes at least one processor, a storage system (including a volatile memory and a non-volatile memory and/or a storage element), at least one input device, and at least one output device.

The program code may be applied to an input instruction to perform various functions described in this application and generate output information. The output information may be applied to one or more output devices in a known manner. For the purpose of this application, the processing system includes any system having a processor such as a digital signal processor (DSP), a microcontroller, an application-specific integrated circuit (ASIC), or a microprocessor.

The program code may be implemented by using an advanced programming language or an object-oriented programming language, to communicate with the processing system. When required, the program code may also be implemented by using an assembly language or a machine language. In fact, the mechanisms described in this application are not limited to a scope of any specific programming language. In any scenario, the language may be a compilation language or an interpretation language.

In some cases, the disclosed embodiments may be implemented by using hardware, firmware, software, or any combination thereof. The disclosed embodiments may be further implemented as instructions carried or stored on one or more transitory or non-transitory machine-readable (for example, computer-readable) storage media, and the instructions may be read and executed by one or more processors. For example, the instructions may be distributed by using a network or another computer-readable medium. Therefore, the machine-readable medium may include any mechanism used to store or transmit information in a machine (for example, computer) readable form, including but not limited to a floppy disk, a compact disc, an optical disc, a read-only memory (CD-ROMs), a magneto-optical disk, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable storage configured to transmit information (such as a carrier, an infrared signal, and a digital signal) via the Internet in an electrical, optical, or acoustic form or another form of propagation signal. Therefore, the machine-readable medium includes any type of machine-readable medium suitable for storing or transmitting electronic instructions or information in the machine (for example, computer) readable form.

In the accompanying drawings, some structure or method features may be shown in a particular arrangement and/or order. However, it should be understood that such specific arrangement and/or sorting may not be required. Instead, in some embodiments, these features may be arranged in a manner and/or order different from that shown in the illustrative accompanying drawings. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolving the technical problem proposed in this application. In addition, to highlight the innovative part of this application, in the foregoing device embodiments of this application, units/modules that are not closely related to resolving the technical problem proposed in this application are not introduced. This does not mean that no other units/modules exist in the foregoing device embodiments.

It should be noted that in the examples and specification of this patent, relational terms such as first and second are only used to distinguish one entity or operation from another entity or operation, and do not necessarily require or imply that there is any such actual relationship or order between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. Without further limitation, the element defined by the sentence "including a" does not exclude that other identical elements also exist in the process, method, article, or device including the element.

Although this application has been illustrated or described with reference to some preferred embodiments of this application, a person of ordinary skill in the art should understand that various modifications may be made to forms and details without departing from the spirit and scope of this application.

## Claims

1. A speaker management method, applied to an electronic device, wherein the electronic device comprises at least a first speaker and a second speaker, and the method comprises:
determining that the electronic device is in a first use scenario;
adjusting an output volume of the first speaker based on a first volume control parameter that is of the first speaker and that corresponds to the first use scenario; and
adjusting an output volume of the second speaker based on a second volume control parameter that is of the second speaker and that corresponds to the first use scenario, wherein the first volume control parameter is different from the second volume control parameter.

2. The method according to claim 1, wherein the method further comprises:
detecting that the electronic device is switched from the first use scenario to a second use scenario;
adjusting the output volume of the first speaker based on a third volume control parameter that is of the first speaker and that corresponds to the second use scenario; and
adjusting the output volume of the second speaker based on a fourth volume control parameter that is of the second speaker and that corresponds to the second use scenario, wherein the third volume control parameter is different from the fourth volume control parameter.

3. The method according to claim 1 or 2, wherein a use scenario of the electronic device comprises at least one of an application running state and a device orientation of the electronic device.

4. The method according to claim 3, wherein
the application running state comprises at least one of the following: a music application running state, a video application running state, and a navigation application running state; and
the device orientation comprises at least one of the following: landscape, portrait, and being handheld.

5. The method according to any one of claims 1 to 4, wherein power consumption of the first speaker is better than power consumption of the second speaker, and the first volume control parameter is greater than the second volume control parameter.

6. The method according to claim 1, wherein the first volume control parameter and the second volume control parameter belong to one of a plurality of groups of preset volume control parameters, the first use scenario is one of a plurality of preset use scenarios, the plurality of groups of preset volume control parameters are in a one-to-one correspondence with the plurality of preset use scenarios, one volume control parameter in each group of preset volume control parameters uniquely corresponds to one speaker in the electronic device, and overall power consumption and a sound effect of the electronic device match a corresponding preset use scenario after output volumes of corresponding speakers in the electronic device are adjusted based on any one group of preset volume control parameters.

7. The method according to any one of claims 1 to 6, wherein the method further comprises:
receiving a volume adjustment instruction of a user, wherein the volume adjustment instruction is used to indicate a volume scaling factor;
when the electronic device is in the first use scenario, based on the volume scaling factor, adjusting, to a fifth volume adjustment parameter, the first volume control parameter corresponding to the first use scenario, and adjusting, to a sixth volume adjustment parameter, the second volume control parameter corresponding to the first use scenario; and
readjusting the output volume of the first speaker based on the fifth volume control parameter, and readjusting the output volume of the second speaker based on the sixth volume control parameter.

8. The method according to claim 1, wherein an architecture of the electronic device comprises an application layer, an application framework layer, and a software/hardware abstraction layer, a native native layer, and a smart power amplifier smart PA layer; and
the output volumes of the first speaker and the second speaker are adjusted by any one of the application layer, the application framework layer, the software/hardware abstraction layer, the native native layer, and the smartPA layer based on volume control parameters corresponding to use scenarios.

9. The method according to claim 1, wherein the method further comprises:
obtaining to-be-played target audio, wherein the first volume control parameter and the second volume control parameter are obtained when the target audio is obtained; and
playing the target audio based on the first speaker whose output volume is adjusted based on the first volume control parameter and the second speaker whose output volume is adjusted based on the second volume control parameter.

10. A speaker management apparatus, applied to an electronic device, wherein the electronic device comprises at least a first speaker and a second speaker, and the apparatus comprises:
a determining module, configured to determine that the electronic device is in a first use scenario;
an adjustment module, configured to: adjust an output volume of the first speaker based on a first volume control parameter that is of the first speaker and that corresponds to the first use scenario, and adjust an output volume of the second speaker based on a second volume control parameter that is of the second speaker and that corresponds to the first use scenario, wherein the first volume control parameter is different from the second volume control parameter.

11. A readable medium, wherein the readable medium stores instructions, and when the instructions are executed on an electronic device, the electronic device is enabled to perform the speaker management method according to any one of claims 1 to 9.

12. An electronic device, comprising: a memory, configured to store instructions to be executed by one or more processors of the electronic device, and a processor, being one of the processors of the electronic device and configured to perform the speaker management method according to any one of claims 1 to 9.
